(19) Europäisches Patentamt
European Patent Office
Office européen des brevets

(11) **EP 4 176 327 B1**

(12) **FASCICULE DE BREVET EUROPEEN**

(45) Date de publication et mention de la délivrance du brevet:
**13.11.2024 Bulletin 2024/46**

(21) Numéro de dépôt: **21740146.2**

(22) Date de dépôt: **21.06.2021**

(51) Classification Internationale des Brevets (IPC):
**G05B 23/02** (2006.01)   **G07C 5/00** (2006.01)
**G07C 5/08** (2006.01)   **G06N 3/08** (2023.01)
**G06N 5/01** (2023.01)   **G06N 7/01** (2023.01)
**G06N 20/10** (2019.01)

(52) Classification Coopérative des Brevets (CPC):
**G05B 23/024; G05B 23/0283; G07C 5/006;**
G06N 3/08; G06N 5/01; G06N 7/01; G06N 20/10;
G07C 5/0808

(86) Numéro de dépôt international:
**PCT/FR2021/051119**

(87) Numéro de publication internationale:
**WO 2022/008814 (13.01.2022 Gazette 2022/02)**

(54) **PROCÉDÉ D'ÉVALUATION DE L'ÉTAT RELATIF D'UN MOTEUR D'AÉRONEF**

VERFAHREN ZUR BEWERTUNG DES RELATIVEN ZUSTANDS EINES FLUGZEUGMOTORS

METHOD FOR EVALUATING THE RELATIVE STATE OF AN AIRCRAFT ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.07.2020 FR 2007139**

(43) Date de publication de la demande:
**10.05.2023 Bulletin 2023/19**

(73) Titulaire: **SAFRAN**
**75015 Paris (FR)**

(72) Inventeurs:
• **PINEAU, Edouard Guy Henri Marie**
**77550 MOISSY-CRAMAYEL (FR)**
• **RAZAKARIVONY, Sébastien Philippe**
**77550 MOISSY-CRAMAYEL (FR)**
• **BONALD, Thomas Pierre Louis**
**78960 VOISINS LE BRETONNEUX (FR)**

(74) Mandataire: **Cabinet Camus Lebkiri**
**25 rue de Maubeuge**
**75009 Paris (FR)**

(56) Documents cités:
WO-A1-2020/115440   FR-A1- 2 939 170
FR-A1- 3 006 785   FR-A1- 3 035 232

• **EHSAN TAHERI ET AL: "Survey of prognostics methods for condition-based maintenance in engineering systems", ARXIV.ORG, CORNELL UNIVERSITY LIBRARY, 201 OLIN LIBRARY CORNELL UNIVERSITY ITHACA, NY 14853, 3 December 2019 (2019-12-03), XP081546035**

**Description**

**DOMAINE TECHNIQUE DE L'INVENTION**

Le domaine technique de l'invention est celui de la surveillance de l'état de moteurs d'aéronefs.

La présente invention concerne un procédé d'évaluation de l'état d'un moteur d'aéronef, et plus particulièrement un procédé d'évaluation de l'état relatif d'un moteur d'aéronef. La présente invention concerne également un procédé de suivi de l'état relatif d'un moteur d'aéronef.

**ARRIERE-PLAN TECHNOLOGIQUE DE L'INVENTION**

Pour anticiper les défaillances d'un moteur d'aéronef, il est connu de surveiller l'état du moteur à partir de données enregistrées au cours de vols successifs de l'aéronef, évoluant au cours du temps. Pour cela, plusieurs familles de méthodes sont classiquement utilisées.

Une première famille de méthodes consiste à choisir parmi les données, un ensemble d'indicateurs physiques et/ou mécaniques représentatifs de l'efficacité du moteur et à suivre la valeur de ces indicateurs au cours du temps. Cependant, le choix de l'ensemble d'indicateurs est basé sur une expertise métier, et notamment sur la connaissance des données et de leurs valeurs dans différents contextes de vol. De plus, l'ensemble d'indicateurs comporte souvent un nombre important de données qui ne sont pas forcément disponibles pour tous les vols.

Une deuxième famille de méthodes consiste à utiliser un modèle physique ou statistique, à l'ajuster aux données puis à suivre des indicateurs, par exemple des paramètres ou des résidus du modèle. Cependant, de telles méthodes nécessitent une connaissance a priori du modèle physique du moteur ou de construire un modèle statistique de substitution expliquant la dynamique des données.

Une troisième famille de méthodes consiste à réaliser un suivi de variables cachées extraites des données par décomposition en facteurs explicatifs.

Des exemples de procédés de surveillance du fonctionnement d'un moteur d'aéronef sont divulgués par les documents FR3006785 A1, FR2939170 A1 et WO2020115440 A1.

Quelle que soit la famille de méthodes utilisée, les valeurs des indicateurs ou variables suivis sont obtenues pour chaque vol puis une tendance est extraite de l'évolution des valeurs sur l'ensemble des vols. Ainsi, ces méthodes n'utilisent pas explicitement d'information d'ordre temporel, par exemple le fait que l'aéronef vieillit au cours du temps, et rien ne force la monotonie des indicateurs ou variables calculés par rapport au temps, qui peuvent prédire une amélioration de l'état du moteur sur certaines périodes, alors qu'aucune opération de maintenance n'a été réalisée.

Il existe donc un besoin d'évaluer l'état d'un moteur d'aéronef en détectant un signal de vieillissement dans des données enregistrées au cours de vols successifs de l'aéronef disponibles pour tous les vols et évoluant au cours du temps, sans utiliser de connaissances a priori.

**RESUME DE L'INVENTION**

L'invention offre une solution aux problèmes évoqués précédemment, en permettant d'évaluer l'état d'un moteur d'aéronef en prenant en compte le vieillissement du moteur au cours du temps, à partir de données classiquement enregistrées au cours de vols successifs de l'aéronef, sans nécessiter d'expertise métier.

Un premier aspect de l'invention concerne un procédé d'évaluation de l'état relatif d'un moteur d'aéronef pour un vol donné de l'aéronef, l'aéronef ayant effectué préalablement au vol donné une pluralité de maintenances et une pluralité de vols entre deux maintenances successives, chaque maintenance étant associée à un instant de maintenance, une pluralité d'ensembles de variables étant enregistrés pendant chaque vol dans un ordre d'enregistrement, chaque vol étant associé à une série temporelle correspondant à un instant de vol et comportant la pluralité d'ensembles de variables enregistrés pendant le vol ordonnés selon l'ordre d'enregistrement, le procédé comportant les étapes suivantes :

- Pour chaque maintenance, création d'un jeu de données comportant la série temporelle associée à chaque vol ayant été effectué entre l'instant de maintenance associé à la maintenance et l'instant de maintenance associé à la maintenance précédente ;
- Création d'un ensemble de jeux de données comprenant chaque jeu de données créé et séparation de l'ensemble de jeux de données en un ensemble d'entraînement et un ensemble de validation ;
- Entraînement conjoint d'une fonction de plongement et d'un classifieur par minimisation d'une fonction de coût, comportant les sous-étapes suivantes :
- Pour chaque jeu de données de l'ensemble d'entraînement :

- Tirage aléatoire d'un couple de séries temporelles comportant une première série temporelle et une deuxième série temporelle ;
- Application de la fonction de plongement au couple de séries temporelles pour obtenir un couple de plongements ;
- Utilisation du classifieur sur le couple de plongements pour obtenir une probabilité que la première série temporelle corresponde à un instant de vol antérieur à l'instant de vol correspondant à la deuxième série temporelle ;
- Calcul de la fonction de coût à partir de la probabilité obtenue, de l'instant de vol correspondant à la première série temporelle et de l'instant de vol correspondant à la deuxième série temporelle ;
- Optimisation de la fonction de plongement et du classifieur par minimisation de la fonction de coût calculée ;

  - Sélection d'une série temporelle de référence parmi les séries temporelles comprises dans l'ensemble de validation, comportant une sous-étape d'application de la fonction de plongement entraînée à la série temporelle de référence pour obtenir un plongement de référence ;
  - Calcul d'un indicateur d'état du moteur pour le vol donné, comportant les sous-étapes suivantes :

    - Application de la fonction de plongement entraînée à la série temporelle associée au vol, pour obtenir un plongement ;
    - Calcul d'une distance entre le plongement et le plongement de référence, la distance calculée correspondant à l'indicateur d'état du moteur.

Grâce à l'invention, une série temporelle comportant des données enregistrées successivement pendant le vol, ordonnées en fonction du temps est construite pour chaque vol. Les séries temporelles correspondant à des vols ayant eu lieu entre deux mêmes maintenances sont regroupées au sein d'un jeu de données.

L'invention repose sur l'hypothèse que de l'information sur le vieillissement du moteur est contenue dans les données et que le vieillissement est un processus monotone par rapport au temps.

Pour extraire un signal monotone traduisant le vieillissement, une fonction de plongement est entraînée sur chaque jeu de données d'un ensemble de jeux de données d'entraînement à l'aide d'un classifieur qui force la fonction de plongement à apprendre à placer, à partir de leurs séries temporelles, chaque vol correspondant à un même jeu de données selon l'ordre temporel dans un espace de plongement.

Une fois entraînée, la fonction de plongement est capable de fournir une représentation des différentes séries temporelles enregistrées le long de la vie de l'aéronef ordonnées dans le temps dans l'espace de plongement. Le calcul d'une distance dans l'espace de plongement entre le vol considéré et un vol effectué antérieurement par l'aéronef choisi comme vol de référence, permet alors d'obtenir un indicateur d'état du moteur prenant en compte le vieillissement.

Comme la fonction de plongement a été entraînée par jeu de données, l'indicateur est monotone entre deux maintenances du moteur, ce qui empêche l'état évalué du moteur de s'améliorer sans effectuer d'opération de maintenance.

L'invention permet donc d'évaluer l'état du moteur en prenant explicitement en compte le vieillissement et sans nécessiter de modélisation du moteur ou des séries temporelles contrairement à l'art antérieur.

Outre les caractéristiques qui viennent d'être évoquées dans le paragraphe précédent, le procédé d'évaluation selon le premier aspect de l'invention peut présenter une ou plusieurs caractéristiques complémentaires parmi les suivantes, considérées individuellement ou selon toutes les combinaisons techniquement possibles.

Selon un mode de réalisation, l'étape de sélection de la série temporelle de référence comporte les sous-étapes suivantes :

- Application de la fonction de plongement entraînée à chaque série temporelle de l'ensemble de validation, pour obtenir un plongement pour chaque série temporelle de l'ensemble de validation ;
- Pour chaque série temporelle de l'ensemble de validation :

  - Calcul de la distance entre le plongement de la série temporelle et le plongement de chaque autre série temporelle de l'ensemble de validation ;
  - Pour chaque jeu de données de l'ensemble de validation, création d'une courbe de vieillissement associant à chaque instant de vol associé à une série temporelle de l'ensemble de validation comprise dans le jeu de données, la distance correspondante calculée ;
  - Pour chaque courbe de vieillissement, calcul d'un indicateur de monotonie ;
  - Calcul d'un indicateur de vieillissement à partir des indicateurs de monotonie calculés ;

la série temporelle de référence étant la série temporelle pour laquelle l'indicateur de vieillissement calculé répond à une condition de vieillissement.

Selon une variante de réalisation du mode de réalisation précédent, la sous-étape de calcul de l'indicateur de monotonie comporte les sous-étapes suivantes :

-   Initialisation de l'indicateur de monotonie à zéro ;
-   Pour chaque intervalle de temps entre deux instants de vol successifs, calcul de la dérivée temporelle à l'ordre 1 de la courbe de vieillissement :

    -   Si la dérivée est positive, incrémentation de l'indicateur de monotonie de 1.

Selon une sous-variante de réalisation de la variante de réalisation précédente, l'indicateur de vieillissement est la somme des indicateurs de monotonie calculés.

Selon une alternative de réalisation de la sous-variante de réalisation précédente, la condition de vieillissement est vérifiée pour l'indicateur de vieillissement calculé maximal.

Ainsi, le vol de référence sélectionné est le vol associé à une série temporelle de l'ensemble de validation correspondant à un état du moteur le plus sain possible, c'est-à-dire le vol permettant d'avoir les courbes de vieillissement les plus monotones possibles.

Selon une variante de réalisation compatible avec le mode de réalisation précédent, le procédé d'évaluation selon le premier aspect de l'invention comporte en outre une étape de déclenchement d'une alarme si l'indicateur d'état du moteur est supérieur à un seuil d'alarme.

Selon une sous-variante de réalisation de la variante de réalisation précédente, le seuil d'alarme est égal à l'indicateur de vieillissement maximal précédant une maintenance d'une marge temporelle prédéfinie.

Ainsi, une alarme est déclenchée quand l'état évalué du moteur a atteint un niveau de vieillissement à partir duquel une maintenance devrait être effectuée pour anticiper une défaillance du moteur. Plus la marge temporelle est élevée et plus le risque qu'une défaillance du moteur survienne avant la prochaine maintenance est faible.

Un deuxième aspect de l'invention concerne un procédé de suivi de l'état relatif d'un moteur d'aéronef sur une pluralité de vols comportant les étapes du procédé d'évaluation selon l'une quelconque des revendications précédentes pour un vol de la pluralité de vols, et l'étape d'évaluation pour chaque autre vol de la pluralité de vols.

Un troisième aspect de l'invention concerne un produit-programme d'ordinateur comprenant des instructions qui, quand le programme est exécuté sur un ordinateur, conduisent celui-ci à mettre en oeuvre les étapes du procédé d'évaluation selon le premier aspect de l'invention ou les étapes du procédé de suivi selon le deuxième aspect de l'invention.

L'invention et ses différentes applications seront mieux comprises à la lecture de la description qui suit et à l'examen des figures qui l'accompagnent.

## BREVE DESCRIPTION DES FIGURES

Les figures sont présentées à titre indicatif et nullement limitatif de l'invention.

-   La figure 1 est un schéma synoptique illustrant l'enchaînement des étapes d'un procédé d'évaluation de l'état d'un moteur d'un aéronef selon le premier aspect de l'invention.
-   La figure 2 est un schéma synoptique illustrant l'enchaînement des sous-étapes pour un premier mode de réalisation de la quatrième étape du procédé selon le premier aspect de l'invention.
-   La figure 3 illustre un exemple des vols et maintenances réalisés au cours du temps par l'aéronef.
-   La figure 4 montre une représentation schématique de la troisième étape du procédé selon le premier aspect de l'invention.
-   La figure 5 montre une représentation schématique de quatrième et cinquième étapes du procédé selon le premier aspect de l'invention.
-   La figure 6 montre une représentation schématique de première, deuxième et troisième sous-étapes du premier mode de réalisation de la quatrième étape du procédé selon le premier aspect de l'invention.
-   La figure 7 représente un exemple de courbe de vieillissement.
-   La figure 8 représente l'état relatif du moteur d'aéronef au cours du temps.

## DESCRIPTION DETAILLEE

Sauf précision contraire, un même élément apparaissant sur des figures différentes présente une référence unique.

Un premier aspect de l'invention concerne un procédé d'évaluation de l'état d'un moteur d'aéronef.

L'aéronef est par exemple un avion, un hélicoptère ou un drone.

L'état du moteur est évalué pour un vol donné de l'aéronef, c'est-à-dire que l'on considère que l'état du moteur de l'aéronef ne varie pas pendant un vol.

Pour pouvoir mettre en oeuvre le procédé selon le premier aspect de l'invention, l'aéronef doit avoir effectué une pluralité de maintenances et une pluralité de vols entre deux maintenances successives, avant le vol pour lequel l'état du moteur est évalué.

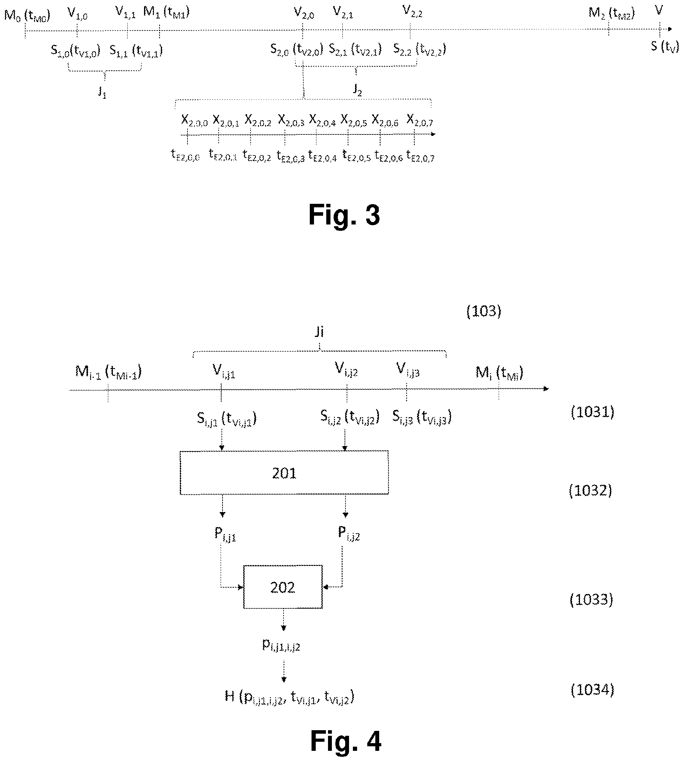

[Fig. 3] La figure 3 illustre un exemple des maintenances $M_i$ et des vols $V_{i,j}$ antérieurs de l'aéronef pour lequel l'état du moteur est évalué pour un vol V donné.

A une i-ème maintenance $M_i$ est associé un ensemble de vol $V_{i,j}$, la notation vol $V_{i,j}$ correspond au j-ème vol ayant eu lieu entre la maintenance $M_{i-1}$ et la maintenance $M_i$.

Chaque maintenance $M_i$ est associée à un instant de maintenance $t_{Mi}$, correspondant par exemple au début ou à la fin de l'intervalle de temps nécessaire pour réaliser la maintenance $M_i$.

Sur la figure 3, l'aéronef a effectué trois maintenances $M_0$, $M_1$, $M_2$ associées respectivement aux instants de maintenance $t_{M0}$, $t_{M1}$, $t_{M2}$.

On considère que la première maintenance $M_0$ de l'aéronef est réalisée avant sa mise en service, c'est-à-dire avant son premier vol $V_{1,0}$.

Pendant chaque vol $V_{i,j}$, V, des données sont enregistrées périodiquement. Plus particulièrement, des ensembles $X_{i,j,k}$ de variables chacun associé à un instant d'enregistrement $t_{Ei,j,k}$ sont enregistrés. Les ensembles $X_{i,j,k}$ de variables peuvent être enregistrés à intervalle de temps fixe, c'est-à-dire que l'intervalle de temps entre les instants d'enregistrement $t_{Ei,j,k}$, $t_{Ei,j,k+1}$ de deux ensembles de variables $X_{i,j,k}$ et $X_{i,j,k+1}$ enregistrés successivement est fixe, ou à intervalle de temps variable.

Les ensembles $X_{i,j,k}$ de variables enregistrés pour un même vol $V_{i,j}$, V ou pour différents vols $V_{i,j}$, V comportent tous les mêmes variables.

Chaque ensemble de variables comporte par exemple au moins une variable relative au moteur, par exemple un couple, une température ou une pression. Peuvent être ajoutés une ou plusieurs variables environnementales, par exemple une température extérieure, une pression atmosphérique, des conditions de vol, et/ou un ou plusieurs paramètres de vol, par exemple des commandes de pilotage ou une charge embarquée.

Chaque vol $V_{i,j}$, V est associé à une série temporelle $S_{i,j}$, S comportant les ensembles $X_{i,j,k}$ de variables enregistrés successivement pendant le vol considéré. Les ensembles $X_{i,j,k}$ de variables sont ordonnés dans l'ordre d'enregistrement, c'est-à-dire qu'un premier ensemble $X_{i,j,k}$ de variables enregistré à un premier instant d'enregistrement $t_{Ei,j,k}$ antérieur à un deuxième instant d'enregistrement $t_{Ei,j,k+1}$ d'un deuxième ensemble $X_{i,j,k+1}$ de variables est situé avant ce deuxième ensemble $X_{i,j,k+1}$ de variables dans la série temporelle $S_{i,j}$, S.

Chaque série temporelle $S_{i,j}$, S est associée à un instant de vol $t_{Vi,j}$, tv correspondant par exemple au début ou à la fin du vol $V_{i,j}$, V correspondant à la série temporelle $S_{i,j}$, S.

Sur la figure 3, l'aéronef a effectué cinq vols $V_{1,0}$, $V_{1,1}$, $V_{2,0}$, $V_{2,1}$, $V_{2,2}$ associées respectivement aux séries temporelles $S_{1,0}$, $S_{1,1}$, $S_{2,0}$, $S_{2,1}$, $S_{2,2}$, avant le vol V considéré, deux vols $V_{1,0}$, $V_{1,1}$ entre la première maintenance $M_0$ et la deuxième maintenance $M_1$ et trois vols $V_{2,0}$, $V_{2,1}$, $V_{2,2}$ entre la deuxième maintenance $M_1$ et la troisième maintenance $M_2$. Les séries temporelles $S_{1,0}$, $S_{1,1}$, $S_{2,0}$, $S_{2,1}$, $S_{2,2}$ sont respectivement associées aux instants de vol $t_{V1,0}$, $t_{V1,1}$, $t_{V2,0}$, $t_{V2,1}$, tv2,2.

Sur la figure 3 est représentée pour le vol $V_{2,0}$, les ensembles de variables $X_{2,0,0}$, $X_{2,0,1}$, $X_{2,0,2}$, $X_{2,0,3}$, $X_{2,0,4}$, $X_{2,0,5}$, $X_{2,0,6}$, $X_{2,0,7}$ enregistrés respectivement aux instants d'enregistrement $t_{E2,0,0}$, $t_{E2,0,1}$, $t_{E2,0,2}$, $t_{E2,0,3}$, $t_{E2,0,4}$, $t_{E2,0,5}$, $t_{E2,0,6}$, $t_{E2,0,7}$. La série temporelle $S_{2,0}$ comporte donc les ensembles de variables $X_{2,0,0}$, $X_{2,0,1}$, $X_{2,0,2}$, $X_{2,0,3}$, $X_{2,0,4}$, $X_{2,0,5}$, $X_{2,0,6}$, $X_{2,0,7}$ ordonnés selon l'ordre des instants d'enregistrement $t_{E2,0,0}$, $t_{E2,0,1}$, $t_{E2,0,2}$, $t_{E2,0,3}$, $t_{E2,0,4}$, $t_{E2,0,5}$, $t_{E2,0,6}$, $t_{E2,0,7}$.

L'état évalué par le procédé selon le premier aspect de l'invention pour le vol V considéré est relatif car obtenu par comparaison avec un vol de référence sélectionné parmi les vols $V_{i,j}$ précédemment effectués par l'aéronef. La série temporelle $S_{i,j}$ associée au vol de référence est appelée série temporelle de référence.

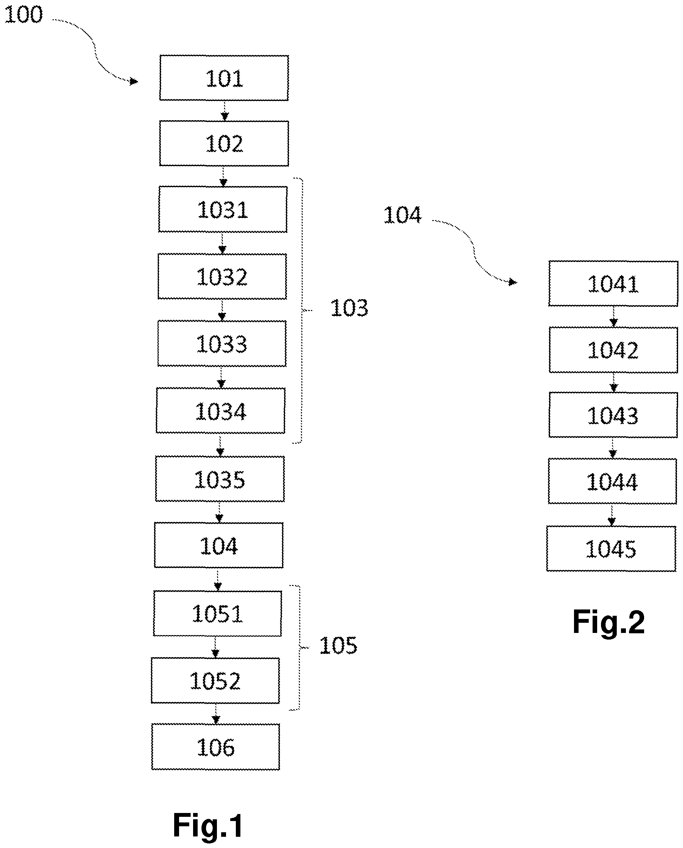

[Fig. 1] La figure 1 est un schéma synoptique illustrant l'enchaînement des étapes du procédé 100 selon le premier aspect de l'invention.

Une première étape 101 du procédé 100 consiste à créer un jeu de données Ji pour chaque maintenance $M_i$ effectuée par l'aéronef avant le vol V considéré.

Le jeu de données Ji comporte la série temporelle $S_{i,j}$ associée à chaque vol $V_{i,j}$ ayant été effectué entre l'instant de maintenance $t_{Mi}$ associé à la maintenance $M_i$ et l'instant de maintenance $t_{Mi-1}$ associé à la maintenance $M_{i-1}$ précédant immédiatement la maintenance $M_i$.

Comme aucun vol n'a été effectué avant la première maintenance $M_0$, aucun jeu de données $J_0$ n'est créé pour la première maintenance $M_0$.

Sur la figure 3, un jeu de données $J_1$ est créé pour la maintenance $M_1$ comportant les séries temporelles $S_{1,0}$ et $S_{1,1}$ associées respectivement aux vols $V_{1,0}$ et $V_{1,1}$ ayant eu lieu entre la première maintenance $M_0$ et la maintenance $M_1$. Un jeu de données $J_2$ est créé pour la maintenance $M_2$ comportant les séries temporelles $S_{2,0}$, $S_{2,1}$, $S_{2,2}$ associées respectivement aux vols $V_{2,0}$, $V_{2,1}$, $V_{2,2}$ ayant eu lieu entre la maintenance $M_1$ et la maintenance $M_2$.

Une deuxième étape 102 du procédé 100 consiste à créer un ensemble de jeux de données comprenant chaque jeu de données Ji créé à la première étape 101.

L'ensemble de jeux de données comprend au moins un jeu de données Ji.

En prenant l'exemple de la figure 3, l'ensemble de jeux de données comprend deux jeux de données $J_1$ et $J_2$.

La deuxième étape 102 du procédé 100 consiste ensuite à séparer l'ensemble de jeux de données en un ensemble d'entraînement et un ensemble de validation. Par exemple, si l'ensemble de jeux de données comporte N jeux de données, l'ensemble d'entraînement comporte n jeux de données parmi les N jeux de données de l'ensemble de jeux de données, avec n strictement inférieur à N, et l'ensemble de validation comporte N-n jeux de données. En général, et en fonction du nombre de jeux de données dont on dispose, n est choisi en sorte que l'ensemble d'entraînement comporte plus de jeux de données que l'ensemble de validation.

Si l'ensemble de jeux de données comprend un unique jeu de données, l'ensemble d'entraînement et l'ensemble de validation comporte par exemple chacun un jeu de données comprenant une partie de l'unique jeu de données de l'ensemble de jeux de données.

Une troisième étape 103 du procédé 100 consiste à entraîner conjointement une fonction de plongement et un classifieur.

[Fig. 4] La figure 4 montre une représentation schématique de la troisième étape 103 du procédé 100.

La fonction de plongement 201 est une fonction paramétrique configurée pour associer à une série temporelle $S_{i,j}$ un point, appelé plongement $P_{i,j}$, dans un espace de plongement. La fonction de plongement 201 est choisie en fonction de l'espace des séries temporelles $S_{i,j}$, S.

La fonction de plongement 201 est par exemple un réseau de neurones, une densité de distribution, une fonction analytique paramétrique ou une fonction de représentation définissant un noyau reproduisant de Hilbert.

Le classifieur 202 est configuré pour associer à un couple de points dans l'espace de plongement, c'est-à-dire à un couple de plongements $P_{i,j}$ comprenant un premier plongement $P_{i,j1}$ et un deuxième plongement $P_{i,j2}$, un scalaire compris entre 0 et 1 correspondant à une probabilité $p_{i,j1,i,j2}$. Le classifieur 202 est choisi en fonction de l'espace de plongement.

Le classifieur 202 est par exemple un classifieur linéaire, comme un perceptron, une machine à vecteurs de support ou un classifieur bayésien, un classifieur quadratique, un réseau de neurones ou un arbre de décision.

L'entraînement est réalisé en minimisant une fonction de coût H dépendant de la probabilité $p_{i,j1,i,j2}$, permettant d'une part de mettre à jour les paramètres du classifieur 202 pour que la probabilité $p_{i,j1,i,j2}$ calculée par le classifieur 202 corresponde à la probabilité qu'une première série temporelle $S_{i,j1}$ correspondant au premier plongement $P_{i,j1}$ soit associée à un instant de vol $t_{Vi,j1}$ antérieur à l'instant de vol $t_{Vi,j2}$ associé à une deuxième série temporelle $S_{i,j2}$ correspondant au deuxième plongement $P_{i,j2}$, et d'autre part de mettre à jour les paramètres de la fonction de plongement 201 pour qu'elle soit capable d'ordonner les plongements $P_{i,j}$ correspondants aux séries temporelles $S_{i,j}$ selon l'ordre temporel dans l'espace de plongement.

La troisième étape 103 comprend plusieurs sous-étapes réalisées pour chaque jeu de données Ji de l'ensemble d'entraînement.

Une première sous-étape 1031 de la troisième étape 103 consiste à tirer aléatoirement dans le jeu de données Ji de l'ensemble d'entraînement, un couple de séries temporelles comportant une première série temporelle $S_{i,j1}$ et une deuxième série temporelle $S_{i,j2}$.

Sur la figure 4, la première sous-étape 1031 est réalisé pour un jeu de données Ji comportant trois vols $V_{i,j1}$, $V_{i,j2}$, $V_{i,j3}$ associés respectivement aux séries temporelles $S_{i,j1}$, $S_{i,j2}$, $S_{i,j3}$, et les séries temporelles $S_{i,j1}$ et $S_{i,j2}$ sont tirées aléatoirement.

Une deuxième sous-étape 1032 de la troisième étape 103 consiste à utiliser la fonction de plongement 201 pour associer le couple de séries temporelles tiré à la première sous-étape 1031 à un couple de plongements $P_{i,j1}$, $P_{i,j2}$.

Sur la figure 4, un plongement $P_{i,j1}$ est obtenu pour la série temporelle $S_{i,j1}$ et un plongement $P_{i,j2}$ obtenu pour la série temporelle $S_{i,j2}$ en utilisant la fonction de plongement 201.

Une troisième sous-étape 1033 de la troisième étape 103 consiste à utiliser le classifieur 202 pour obtenir la probabilité $p_{i,j1,i,j2}$ pour le couple de plongements $P_{i,j1}$, $P_{i,j2}$ obtenus à la deuxième sous-étape 1032.

Sur la figure 4, une probabilité $p_{i,j1,i,j2}$ est obtenue pour un couple de plongements comportant le plongement $P_{i,j1}$ et le plongement $P_{i,j2}$ en utilisant le classifieur 202.

Une quatrième sous-étape 1034 de la troisième étape 103 consiste à calculer la fonction de coût H à partir de la probabilité $p_{i,j1,i,j2}$ obtenue à la troisième sous-étape 1033, de l'instant de vol $t_{Vi,j1}$ correspondant à la première série temporelle $S_{i,j1}$ et de l'instant de vol $t_{Vi,j2}$ correspondant à la deuxième série temporelle $S_{i,j2}$.

La fonction de coût H est par exemple une fonction d'entropie binaire, s'exprimant comme :

$$H(p_{i,j1,i,j2}) = c(t_{Vi,j1}, t_{Vi,j2}) \log(p_{i,j1,i,j2}) + (1 - c(t_{Vi,j1}, t_{Vi,j2})) \log(1 - p_{i,j1,i,j2})$$

Avec c valant 0 si l'instant de vol $t_{Vi,j1}$ correspondant à la première série temporelle $S_{i,j1}$ est postérieur à l'instant de vol $t_{Vi,j2}$ correspondant à la deuxième série temporelle $S_{i,j2}$ et valant 1 si l'instant de vol $t_{Vi,j1}$ correspondant à la première série temporelle $S_{i,j1}$ est antérieur à l'instant de vol $t_{Vi,j2}$ correspondant à la deuxième série temporelle $S_{i,j2}$.

Dans le cas de la figure 4, c vaut 1 puisque la première série temporelle $S_{i,j1}$ est associée à un instant de vol $t_{Vi,j1}$ antérieur à l'instant de vol $t_{Vi,j2}$ correspondant à la deuxième série temporelle $S_{i,j2}$.

La fonction de coût H est dans un autre exemple une fonction d'entropie binaire régularisée, s'exprimant comme :

$$H\big(p_{i,j1,i,j2}\big) = c\big(t_{Vi,j1}, t_{Vi,j2}\big) \log\big(p_{i,j1,i,j2}\big) + \big(1 - c\big(t_{Vi,j1}, t_{Vi,j2}\big)\big) \log\big(1 - p_{i,j1,i,j2}\big)$$
$$+ \big\|P_{i,j1}\big\| + \big\|P_{i,j2}\big\|$$

Avec $\|.\|$ correspondant au terme de régularisation par exemple par la norme L1 $\|.\|_1$ pour obtenir un plongement parcimonieux ou la norme L2 $\|.\|_2$ pour obtenir un plongement sphérique centré en 0.

La fonction de coût H est dans un autre exemple la fonction suivante :

$$H\big(p_{i,j1,i,j2}\big) = \big\|c\big(t_{Vi,j1}, t_{Vi,j2}\big) - p_{i,j1,i,j2}\big\|$$

Une cinquième sous-étape 1035 de la troisième étape 103 consiste à optimiser la fonction de plongement 201 et le classifieur 202 par minimisation de la fonction de coût H calculée à la quatrième sous-étape 1034.

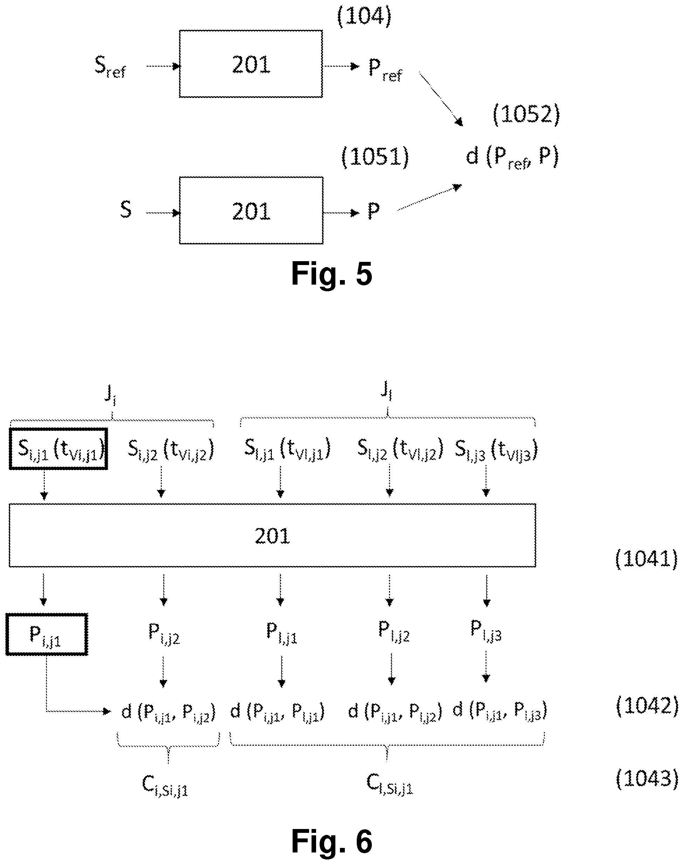

[Fig. 5] La figure 5 montre une représentation schématique d'une quatrième et d'une cinquième étape 105 du procédé 100.

La quatrième étape 104 du procédé 100 consiste à sélectionner la série temporelle de référence $S_{ref}$ parmi les séries temporelles $S_{i,j}$ comprises dans l'ensemble de validation.

[Fig. 2] La figure 2 est un schéma synoptique illustrant l'enchaînement des sous-étapes pour un premier mode de réalisation de la quatrième étape 104 du procédé 100.

[Fig. 6] La figure 6 montre une représentation schématique d'une première sous-étape 1041, d'une deuxième sous-étape 1042 et d'une troisième sous-étape 1043 du premier mode de réalisation de la quatrième étape 104 du procédé 100.

La première sous-étape 1041 de la quatrième étape 104 selon le premier mode de réalisation consiste à appliquer la fonction de plongement 201 entraînée à chaque série temporelle $S_{i,j}$ de l'ensemble de validation, pour obtenir un plongement $P_{i,j}$ pour chaque série temporelle $S_{i,j}$ de l'ensemble de validation.

Sur la figure 6, l'ensemble de validation comporte un premier jeu de données Ji comprenant deux séries temporelles $S_{i,j1}$, $S_{i,j2}$ et un deuxième jeu de données $J_l$ comprenant trois séries temporelles $S_{l,j1}$, $S_{l,j2}$, $S_{l,j3}$. Lors de la première sous-étape 1041 de la quatrième étape 104 selon le premier mode de réalisation, un plongement $P_{i,j1}$ est obtenu pour la série temporelle $S_{i,j1}$, un plongement $P_{i,j2}$ est obtenu pour la série temporelle $S_{i,j2}$, un plongement $P_{l,j1}$ est obtenu pour la série temporelle $S_{l,j1}$, un plongement $P_{l,j2}$ est obtenu pour la série temporelle $S_{l,j2}$ et un plongement $P_{l,j3}$ est obtenu pour la série temporelle $S_{l,j3}$.

La deuxième sous-étape 1042, la troisième sous-étape 1043, la quatrième sous-étape 1044 et la cinquième sous-étape 1045 sont réalisées pour chaque série temporelle $S_{i,j}$ de l'ensemble de validation.

La deuxième sous-étape 1042 de la quatrième étape 104 selon le premier mode de réalisation consiste à utiliser le plongement $P_{i,j}$ calculé à la première sous-étape 1041 pour chaque série temporelle $S_{i,j}$ de l'ensemble de validation, pour calculer une distance d entre le plongement $P_{i,j}$ d'une série temporelle $S_{i,j}$ considérée et le plongement de chacune des autres séries temporelles de l'ensemble de validation.

Par exemple, sur la figure 6, la série temporelle considérée est la série temporelle $S_{i,j1}$ ce qui est matérialisé par un encadrement. Lors de la deuxième sous-étape 1042 de la quatrième étape 104 selon le premier mode de réalisation, une distance d $(P_{i,j1}, P_{i,j2})$ est calculée entre la série temporelle $S_{i,j1}$ considérée et la série temporelle $S_{i,j2}$, une distance d $(P_{i,j1}, P_{l,j1})$ est calculée entre la série temporelle $S_{i,j1}$ considérée et la série temporelle $S_{l,j1}$, une distance d $(P_{i,j1}, P_{l,j2})$ est calculée entre la série temporelle $S_{i,j1}$ considérée et la série temporelle $S_{l,j2}$ et une distance d $(P_{i,j1}, P_{l,j3})$ est calculée entre la série temporelle $S_{i,j1}$ considérée et la série temporelle $S_{l,j3}$.

La distance d est une distance sur l'espace de plongement. Par exemple, si l'espace de plongement est un espace de distributions, la distance d peut être n'importe quelle distance définie sur l'espace des distributions. Si l'espace de plongement est un espace vectoriel, la distance d peut être n'importe quelle distance définie sur un espace vectoriel. Une distance d $(P_{i,j1}, P_{l,j2})$ calculée entre le plongement $P_{i,j1}$ vectoriel de la série temporelle $S_{i,j1}$ et le plongement $P_{l,j2}$ vectoriel de la série temporelle $S_{l,j2}$ est par exemple la distance L2 entre les vecteurs $P_{i,j1}$ et $P_{l,j2}$ qui s'exprime comme suit :

$$\left\| P_{i,j1} - P_{l,j2} \right\|$$

La troisième sous-étape 1043 de la quatrième étape 104 selon le premier mode de réalisation consiste à créer une courbe de vieillissement $C_{i,Si,j}$ pour chaque jeu de données Ji de l'ensemble de validation et chaque série temporelle $S_{i,j}$ de l'ensemble de validation considérée.

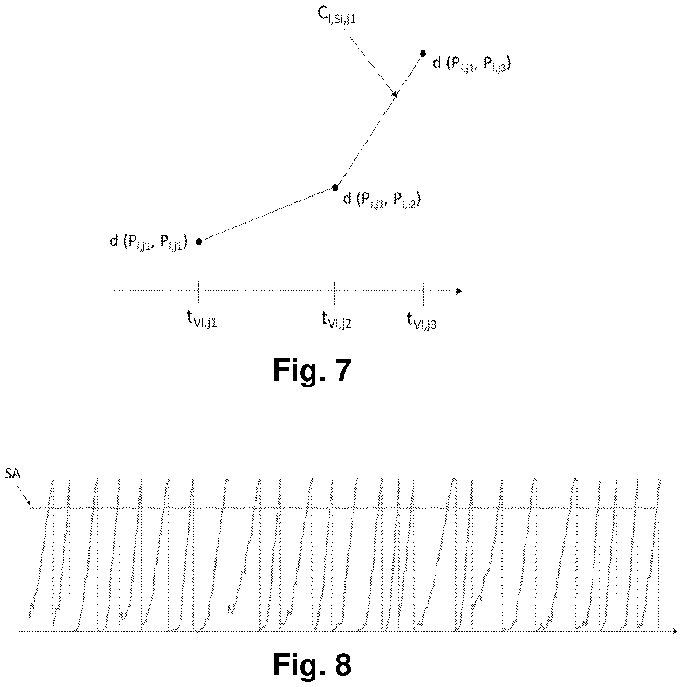

[Fig. 7] La figure 7 représente un exemple de courbe de vieillissement d'un jeu de données.

Pour un jeu de données $J_l$ considéré, la courbe de vieillissement $C_{l,Si,j}$ associe à chaque instant de vol $t_{Vl,j}$ associé à une série temporelle $S_{l,j}$ de l'ensemble de validation comprise dans le jeu de données $J_l$, la distance d calculée à la deuxième sous-étape 1042 de la quatrième étape 104 selon le premier mode de réalisation, entre la série temporelle $S_{i,j}$ considérée et la série temporelle $S_{l,j}$ de l'ensemble de validation comprise dans le jeu de données $J_l$.

Sur la figure 6, l'ensemble de validation comporte uniquement deux jeux de données Ji et $J_l$. Lors de la troisième sous-étape 1043 de la quatrième étape 104 selon le premier mode de réalisation, une courbe de vieillissement $C_{i,Si,j1}$ est créée pour le jeu de données Ji et une courbe de vieillissement $C_{l,Si,j1}$ est créée pour le jeu de données Ji. La série temporelle considérée étant la série temporelle $S_{i,j1}$, la courbe de vieillissement $C_{i,Si,j1}$ comporte la distance d ($P_{i,j1}$, $P_{i,j2}$) entre la série temporelle $S_{i,j1}$ considérée et la série temporelle $S_{i,j2}$, et la courbe de vieillissement $C_{l,Si,j1}$ comporte la distance d ($P_{i,j1}$, $P_{l,j1}$) entre la série temporelle $S_{i,j1}$ considérée et la série temporelle $S_{l,j1}$, la distance d ($P_{i,j1}$, $P_{l,j2}$) entre la série temporelle $S_{i,j1}$ considérée et la série temporelle $S_{l,j2}$ et la distance d ($P_{i,j1}$, $P_{l,j3}$) entre la série temporelle $S_{i,j1}$ considérée et la série temporelle $S_{l,j3}$.

Sur la figure 7, la courbe de vieillissement Ci, $S_{i,j1}$ calculée pour le jeu de données $J_l$ par rapport à la série temporelle considérée $S_{i,j}$ est représentée en fonction du temps. La courbe de vieillissement $C_{l,Si,j1}$ est par exemple une fonction continue par rapport au temps construite par interpolation linéaire.

La quatrième sous-étape 1044 de la quatrième étape 104 selon le premier mode de réalisation consiste à calculer un indicateur de monotonie pour chaque courbe de vieillissement $C_{i,Si,j}$ créée à la troisième sous-étape 1043 de la quatrième étape 104 selon le premier mode de réalisation.

La quatrième sous-étape 1044 de la quatrième étape 104 selon le premier mode de réalisation comporte par exemple une première sous-étape consistant à initialiser l'indicateur de monotonie à zéro, puis une deuxième sous-étape consistant à calculer la dérivée temporelle à l'ordre 1 de la courbe de vieillissement $C_{i,Si,j}$ pour chaque intervalle de temps entre deux instants de vol $t_{Vi,j}$ successifs et à incrémenter l'indicateur de monotonie de 1 quand la dérivée calculée est positive.

L'indicateur de monotonie d'une courbe de vieillissement correspond alors au nombre d'intervalles de temps entre deux instants de vol $t_{Vi,j}$ successifs pour lesquels la dérivée temporelle à l'ordre 1 de la courbe de vieillissement $C_{i,Si,j}$ est positive.

La cinquième sous-étape 1045 de la quatrième étape 104 selon le premier mode de réalisation consiste à calculer un indicateur de vieillissement à partir de chaque indicateur de monotonie calculé à la quatrième sous-étape 1044 de la quatrième étape 104 selon le premier mode de réalisation.

L'indicateur de vieillissement est par exemple la somme des indicateurs de monotonie calculés à la quatrième sous-étape 1044 de la quatrième étape 104 selon le premier mode de réalisation.

A la fin de la cinquième sous-étape 1045 de la quatrième étape 104 selon le premier mode de réalisation, un indicateur de vieillissement est calculé pour chaque série temporelle $S_{i,j}$ de l'ensemble de validation.

La série temporelle de référence $S_{ref}$ est alors la série temporelle $S_{i,j}$ pour laquelle l'indicateur de vieillissement calculé à la cinquième sous-étape 1045 de la quatrième étape 104 selon le premier mode de réalisation répond à une condition de vieillissement.

La condition de vieillissement est par exemple vérifiée pour l'indicateur de vieillissement maximal.

Le plongement $P_{i,j}$ calculée à la première sous-étape 1041 de la quatrième étape 104 selon le premier mode de réalisation pour la série temporelle de référence $S_{ref}$ est appelé plongement de référence $P_{ref}$.

Selon le deuxième mode de réalisation, la série temporelle de référence $S_{ref}$ est la série temporelle $S_{1,0}$ associée au premier vol $V_{1,0}$ de l'aéronef.

La quatrième étape 104 selon le deuxième mode de réalisation comporte une sous-étape d'utilisation de la fonction de plongement 201 entraînée sur la série de référence $S_{ref}$ pour obtenir un plongement de référence $P_{ref}$.

La cinquième étape 105 du procédé 100 consiste à calculer un indicateur d'état du moteur pour le vol V considéré.

Une première sous-étape 1051 de la cinquième étape 105 consiste à appliquer la fonction de plongement 201 entraînée à la série temporelle S associée au vol V pour obtenir un plongement P, comme illustré sur la figure 5.

Une deuxième sous-étape 1052 de la cinquième étape 105 consiste à calculer la distance d entre le plongement P calculé à la première sous-étape 1051 de la cinquième étape 105 et le plongement de référence $P_{ref}$, comme illustré sur la figure 5.

L'indicateur d'état du moteur est alors égal à la distance d calculée à la deuxième sous-étape 1052 de la cinquième étape 105.

[Fig. 8] La figure 8 représente l'état relatif du moteur d'aéronef au cours du temps, sous la forme d'une courbe qui représente l'indicateur d'état du moteur en fonction du temps. Les traits verticaux représentent les instants des maintenances effectuées. Cette courbe présente ainsi une discontinuité à chaque maintenance $M_i$ ; elle est approximativement monotone entre deux maintenances $M_i$, correspondant à la courbe de vieillissement d'un jeu de données calculée entre ces deux maintenances.

Le procédé 100 peut comporter en outre une sixième étape 106 consistant à déclencher une alarme si l'indicateur d'état du moteur est supérieur à un seuil d'alarme SA.

Le seuil d'alarme SA est par exemple égal à l'indicateur de vieillissement maximal précédant une maintenance $M_i$ d'une marge temporelle prédéfinie, c'est-à-dire à l'indicateur de vieillissement ayant la valeur la plus importante parmi un ensemble d'indicateurs de vieillissement comportant chaque indicateur de vieillissement calculé à un instant précédant une maintenance $M_i$ de la marge temporelle.

Un deuxième aspect de l'invention concerne un procédé de suivi de l'état relatif du moteur de l'aéronef au cours d'un ensemble de vols V.

Le procédé de suivi selon le deuxième aspect de l'invention comporte par exemple les étapes du procédé 100 d'évaluation selon le premier aspect de l'invention pour un premier vol V de l'ensemble de vols, puis la sixième étape 106 du procédé 100 d'évaluation selon le premier aspect de l'invention pour les autres vols V de l'ensemble de vols.

Un troisième aspect de l'invention concerne un produit-programme d'ordinateur comprenant des instructions qui, quand le programme est exécuté sur un ordinateur, conduisent celui-ci à mettre en oeuvre les étapes du procédé d'évaluation selon le premier aspect de l'invention ou les étapes du procédé de suivi selon le deuxième aspect de l'invention.

Le produit-programme d'ordinateur selon l'invention est un outil de surveillance ou de monitoring, de préférence implémenté au sol.

**Revendications**

1. Procédé (100) d'évaluation de l'état relatif d'un moteur d'aéronef pour un vol (V) donné de l'aéronef, l'aéronef ayant effectué préalablement au vol (V) donné une pluralité de maintenances (Mi) et une pluralité de vols ($V_{i,j}$) entre deux maintenances (Mi) successives, chaque maintenance (Mi) étant associée à un instant de maintenance ($t_{Mi}$), une pluralité d'ensembles ($X_{i,j,k}$) de variables étant enregistrés pendant chaque vol ($V_{i,j}$ ,V) dans un ordre d'enregistrement, chaque vol ($V_{i,j}$, V) étant associé à une série temporelle (S, $S_{i,j}$) correspondant à un instant de vol (tv, $t_{Vi,j}$) et comportant la pluralité d'ensembles ($X_{i,j,k}$) de variables enregistrés pendant le vol ($V_{i,j}$, V) ordonnés selon l'ordre d'enregistrement, le procédé (100) étant **caractérisé en ce qu'**il comporte les étapes suivantes :

   - Pour chaque maintenance (Mi), création d'un jeu de données (Ji) comportant la série temporelle ($S_{i,j}$) associée à chaque vol ($V_{i,j}$) ayant été effectué entre l'instant de maintenance ($t_{Mi}$) associé à la maintenance (Mi) et l'instant de maintenance ($t_{Mi-1}$) associé à la maintenance précédente ($M_{i-1}$, 101) ;
   - Création d'un ensemble de jeux de données comprenant chaque jeu de données (Ji) créé et séparation de l'ensemble de jeux de données (Ji) en un ensemble d'entraînement et un ensemble de validation (102) ;
   - Entraînement conjoint d'une fonction de plongement (201) et d'un classifieur (202) par minimisation d'une fonction de coût (H, 103), comportant les sous-étapes suivantes :

      ◦ Pour chaque jeu de données (Ji) de l'ensemble d'entraînement :

         • Tirage aléatoire d'un couple de séries temporelles comportant une première série temporelle ($S_{i,j1}$) et une deuxième série temporelle ($S_{i,j2}$, 1031) ;
         • Application de la fonction de plongement (201) au couple de séries temporelles pour obtenir un couple de plongements ($P_{i,j1}$, $P_{i,j2}$, 1032) ;
         • Utilisation du classifieur (202) sur le couple de plongements ($P_{i,j1}$, $P_{i,j2}$) pour obtenir une probabilité ($p_{i,j1,i,j2}$) que la première série temporelle ($S_{i,j1}$) corresponde à un instant de vol ($t_{Vi,j1}$) antérieur à l'instant de vol ($t_{Vi,j2}$) correspondant à la deuxième série temporelle ($S_{i,j2}$, 1033) ;
         • Calcul de la fonction de coût (H) à partir de la probabilité ($p_{i,j1,i,j2}$) obtenue, de l'instant de vol ($t_{Vi,j1}$) correspondant à la première série temporelle ($S_{i,j1}$) et de l'instant de vol ($t_{Vi,j2}$) correspondant à la deuxième série temporelle ($S_{i,j2}$, 1034) ;
         • Optimisation de la fonction de plongement (201) et du classifieur (202) par minimisation de la fonction de coût (H) calculée (1035) ;

   - Sélection d'une série temporelle de référence ($S_{ref}$) parmi les séries temporelles ($S_{i,j}$) comprises dans l'ensemble de validation, comportant une sous-étape d'application de la fonction de plongement (201) entraînée à la série temporelle de référence ($S_{ref}$) pour obtenir un plongement de référence ($P_{ref}$, 104) ;
- Calcul d'un indicateur d'état du moteur pour le vol (V) donné (105), comportant les sous-étapes suivantes :

⚬ Application de la fonction de plongement (201) entraînée à la série temporelle (S) associée au vol (V), pour obtenir un plongement (P, 1051);
⚬ Calcul d'une distance (d) entre le plongement (P) et le plongement de référence ($P_{ref}$, 1052), la distance (d) calculée correspondant à l'indicateur d'état du moteur.

2. Procédé (100) d'évaluation selon la revendication 1, **caractérisé en ce que** l'étape (104) de sélection de la série temporelle de référence ($S_{ref}$) comporte les sous-étapes suivantes :

- Application de la fonction de plongement (201) entraînée à chaque série temporelle ($S_{i,j}$) de l'ensemble de validation, pour obtenir un plongement ($P_{i,j}$) pour chaque série temporelle ($S_{i,j}$) de l'ensemble de validation (1041) ;
- Pour chaque série temporelle ($S_{i,j}$) de l'ensemble de validation :

⚬ Calcul de la distance (d) entre le plongement ($P_{i,j}$) de la série temporelle ($S_{i,j}$) et le plongement ($P_{i,j}$) de chaque autre série temporelle ($S_{i,j}$) de l'ensemble de validation (1042) ;
⚬ Pour chaque jeu de données (Ji) de l'ensemble de validation, création d'une courbe de vieillissement ($C_{i,Si,j}$) associant à chaque instant de vol ($t_{Vi,j}$) associé à une série temporelle ($S_{i,j}$) de l'ensemble de validation comprise dans le jeu de données (Ji), la distance (d) correspondante calculée (1043) ;
⚬ Pour chaque courbe de vieillissement ($C_{i,Si,j}$), calcul d'un indicateur de monotonie (1044) ;
⚬ Calcul d'un indicateur de vieillissement à partir des indicateurs de monotonie calculés (1045) ;

la série temporelle de référence ($S_{ref}$) étant la série temporelle ($S_{i,j}$) pour laquelle l'indicateur de vieillissement calculé répond à une condition de vieillissement.

3. Procédé (100) d'évaluation selon la revendication 2, **caractérisé en ce que** la sous-étape (1044) de calcul de l'indicateur de monotonie comporte les sous-étapes suivantes :

- Initialisation de l'indicateur de monotonie à zéro ;
- Pour chaque intervalle de temps entre deux instants de vol ($t_{Vi,j}$) successifs, calcul de la dérivée temporelle à l'ordre 1 de la courbe de vieillissement ($C_{i,Si,j}$) :

⚬Si la dérivée est positive, incrémentation de l'indicateur de monotonie de 1.

4. Procédé (100) d'évaluation selon la revendication 3, **caractérisé en ce que** l'indicateur de vieillissement est la somme des indicateurs de monotonie calculés.

5. Procédé (100) d'évaluation selon la revendication 4, **caractérisé en ce que** la condition de vieillissement est vérifiée pour l'indicateur de vieillissement calculé maximal.

6. Procédé (100) d'évaluation selon l'une quelconque des revendications précédentes, **caractérisé en ce que** la fonction de coût (H) est une fonction d'entropie binaire.

7. Procédé (100) d'évaluation selon l'une quelconque des revendications précédentes, **caractérisé en ce qu'**il comporte en outre une étape (106) de déclenchement d'une alarme si l'indicateur d'état du moteur est supérieur à un seuil d'alarme (SA).

8. Procédé (100) d'évaluation selon les revendications 2 et 7, **caractérisé en ce que** le seuil d'alarme (SA) est égal à l'indicateur de vieillissement maximal précédant une maintenance (Mi) d'une marge temporelle prédéfinie.

9. Procédé de suivi de l'état relatif d'un moteur d'aéronef sur une pluralité de vols (V) comportant les étapes du procédé (100) d'évaluation selon l'une quelconque des revendications précédentes pour un vol (V) de la pluralité de vols (V), et l'étape (106) de déclenchement pour chaque autre vol (V) de la pluralité de vols (V).

10. Produit-programme d'ordinateur comprenant des instructions qui, quand le programme est exécuté sur un ordinateur, conduisent celui-ci à mettre en oeuvre les étapes du procédé (100) d'évaluation selon l'une quelconque des revendications 1 à 8 ou les étapes du procédé de suivi selon la revendication 9.

**Patentansprüche**

1. Verfahren (100) zur Bewertung des relativen Zustands eines Luftfahrzeugtriebwerks für einen gegebenen Flug (V) des Luftfahrzeugs, wobei an dem Luftfahrzeug vor dem gegebenen Flug (V) eine Vielzahl von Wartungen (Mi) und zwischen zwei aufeinanderfolgenden Wartungen (Mi) eine Vielzahl von Flügen ($V_{i,j}$) durchgeführt werden, wobei jede Wartung (Mi) einem Wartungszeitpunkt ($t_{Mi}$) zugeordnet wird und während jedes Flugs ($V_{i,j}$ ,V) in einer Aufzeichungsreihenfolge eine Vielzahl von Variablen ($X_{i,j,k}$) aufgezeichnet werden, wobei jeder Flug ($V_{i,j}$,V) einer einem Flugzeitpunkt (tv, $t_{Vi,j}$) entsprechenden Zeitreihe (S, $S_{i,j}$) zugeordnet ist und die Vielzahl von Variablen ($X_{i,j,k}$) umfasst, die während des Flugs ($V_{i,j}$,V) in der Aufzeichnungsreihenfolge aufgezeichnet werden, wobei das Verfahren (100) **dadurch gekennzeichnet ist, dass** es die folgenden Schritte umfasst:

   - Für jede Wartung (Mi) Erstellung eines Datensatzes (Ji) mit der Zeitreihe ($S_{i,j}$), die jedem Flug ($V_{i,j}$) zugeordnet ist, der zwischen dem der Wartung (Mi) zugeordneten Zeitpunkt ($t_{Mi}$) und dem der vorherigen Wartung ($M_{i-1}$, 101) zugeordneten Wartungszeitpunkt ($t_{Mi-1}$) durchgeführt wurde;
   - Erstellung einer Reihe von Datensätzen, jeden angelegten Datensatz (Ji) umfassend und Trennung der Reihe von Datensätzen (Ji) in eine Trainingsdatenmenge und eine Freigabedatenmenge (102);
   - Gemeinsames Training einer Einbettungsfunktion (201) und eines Klassifikators (202) durch Minimierung einer Kostenfunktion (H, 103), mit den folgenden Teilschritten:

      ∘ Für jeden Datensatz (Ji) aus der Trainingsdatenmenge:

         • Zufälliges Ziehen eines Zeitreihenpaares mit einer ersten Zeitreihe ($S_{i,j1}$) und einer zweiten Zeitreihe ($S_{i,j2}$, 1031);
         • Anwendung der Einbettungsfunktion (201) auf das Zeitreihenpaar, um ein Einbettungspaar ($P_{i,j1}$, $P_{i,j2}$, 1032) zu erzielen;
         • Verwendung des Klassifikators (202) auf das Einbettungspaar ($P_{i,j1}$, $P_{i,j2}$), um eine Wahrscheinlichkeit ($p_{i,j1,i,j2}$) zu erreichen, dass die erste Zeitreihe ($S_{i,j1}$) einem Flugzeitpunkt ($t_{Vi,j1}$) entspricht, der vor dem der zweiten Zeitreihe ($S_{i,j2}$, 1033) entsprechenden Flugzeitpunkt liegt;
         • Berechnung der Kostenfunktion (H), ausgehend von der erzielten Wahrscheinlichkeit ($p_{i,j1,i,j2}$), des der ersten Zeitreihe ($S_{i,j1}$) entsprechenden Flugzeitpunkts ($t_{V1,j1}$) und des der zweiten Zeitreihe ($S_{i,j2}$, 1034) entsprechenden Flugzeitpunkts (tvi, $_{j2}$);
         • Optimierung der Einbettungsfunktion (201) und des Klassifikators (202) durch Minimierung der berechneten (1035) Kostenfunktion (H);

   - Auswahl einer Referenzzeitreihe ($S_{ref}$) unter den Zeitreihen ($S_{i,j}$) der Freigabedatenmenge, einen Anwendungsteilschritt der Einbettungsfunktion (201) umfassend, die mit der Referenzzeitreihe ($S_{ref}$) trainiert wird, um eine Referenzeinbettung zu erhalten ($P_{ref}$, 104);
   - Berechnung einer Triebwerkszustandsanzeige für den gegebenen (105) Flug (V) mit folgenden Teilschritten:

      ∘ Anwendung der Einbettungsfunktion (201), die mit der dem Flug (V) zugeordneten Zeitreihe (S) trainiert wird, um eine Einbettung (P, 1051) zu erzielen;
      ∘ Berechnung einer Distanz (d) zwischen der Einbettung (P) und der Referenzeinbettung ($P_{ref}$, 1052), wobei die berechnete Distanz (d) der Triebwerkszustandsanzeige entspricht.

2. Evaluierungsverfahren (100) nach Anspruch 1, **dadurch gekennzeichnet, dass** der Auswahlschritt (104) der Referenzzeitreihe ($S_{ref}$) die folgenden Teilschritte umfasst:

   - Anwendung der Einbettungsfunktion (201), die mit jeder Zeitreihe ($S_{i,j}$) der Freigabedatenmenge trainiert wird, um für jede Zeitreihe ($S_{i,j}$) der Freigabedatenmenge (1041) eine Einbettung ($P_{i,j}$) zu erzielen;
   - Für jede Zeitreihe ($S_{i,j}$) der Freigabedatenmenge:

      ∘ Berechnung der Distanz (d) zwischen der Einbettung ($P_{i,j}$) der Zeitreihe ($S_{i,j}$) und der Einbettung ($P_{i,j}$) jeder anderen Zeitreihe ($S_{i,j}$) der Freigabedatenmenge (1042);
      ∘ Für jeden Datensatz (Ji) der Freigabedatenmenge, Erstellung einer Alterungskurve ($C_{i,si,j}$), die für jeden Flugzeitpunkt ($t_{Vi,j}$), der mit einer Zeitreihe ($S_{i,j}$) aus der im Datensatz (Ji) enthaltenen Freigabedatenmenge assoziiert ist, die entsprechend berechnete (1043) Distanz (d) assoziiert;
- Für jede Alterungskurve ($C_{i,Si,j}$), Berechnung eines Monotonieindikators (1044);
- Berechnung eines Alterungsindikators anhand der berechneten Monotonieindikatoren (1045);

wobei die Referenzzeitreihe ($S_{ref}$) die Zeitreihe ($S_{i,j}$) ist, für die der berechnete Alterungsindikator einer Alterungsbedingung entspricht.

3. Evaluierungsverfahren (100) nach Anspruch 2, **dadurch gekennzeichnet, dass** der Teilschritt (1044) der Berechnung des Monotonieindikators die folgenden Teilschritte umfasst:

   - Initialisierung des Monotonieindikators auf null;
   - Für jedes Zeitintervall zwischen zwei aufeinanderfolgenden Flugzeitpunkten ($t_{Vi,j}$), Berechnung der zeitlichen Ableitung in der Reihenfolge 1 der Alterungskurve ($C_{i,Si,j}$):

      - Wenn die Ableitung positiv ist, inkrementiert der Monotonieindikator um 1.

4. Evaluierungsverfahren (100) nach Anspruch 3, **dadurch gekennzeichnet, dass** der Alterungsindikator die Summe der berechneten Monotonieindikatoren ist.

5. Evaluierungsverfahren (100) nach Anspruch 4, **dadurch gekennzeichnet, dass** die Alterungsbedingung für den maximal berechneten Alterungsindikator überprüft wird.

6. Evaluierungsverfahren (100) nach einem der vorhergehenden Ansprüche, **dadurch gekennzeichnet, dass** die Kostenfunktion (H) eine binäre Entropiefunktion ist.

7. Evaluierungsverfahren (100) nach einem der vorhergehenden Ansprüche, **dadurch gekennzeichnet, dass** es außerdem einen Schritt (106) der Auslösung eines Alarms umfasst, wenn die Triebswerkszustandsanzeige über einen Alarm-Grenzwert (SA) liegt.

8. Evaluierungsverfahren (100) nach den Ansprüchen 2 und 7, **dadurch gekennzeichnet, dass** der Grenzwert für den Alarm (SA) gleich dem maximalen Alterungsindikator vor einer Wartung (Mi) mit einem voreingestellten Zeitpuffer ist.

9. Trackingverfahren des relativen Zustands eines Flugzeugtriebwerks während einer Vielzahl von Flügen (V) mit den Schritten des Evaluierungsverfahrens (100) nach einem der vorhergehenden Ansprüche für einen Flug (V) der Vielzahl von Flügen (V), und Schritt (106) des Auslösens für jeden anderen Flug (V) aus der Vielzahl von Flügen (V).

10. Computerproduktprogramm mit Anweisungen, die, wenn das Programm auf einem Computer ausgeführt wird, diesen dazu führen, die Schritte des Evaluierungsverfahrens (100) nach einem der Ansprüche 1 bis 8 oder die Schritte des Trackingverfahrens nach Anspruch 9 auszuführen.

## Claims

1. A method (100) for evaluating the relative state of an aircraft engine for a given flight (V) of the aircraft, the aircraft having performed a plurality of maintenance operations (Mi) prior to the given flight (V) and a plurality of flights ($V_{i,j}$) between two successive maintenance operations (Mi), each maintenance operation (Mi) being associated with a maintenance time instant ($t_{Mi}$), a plurality of collections ($X_{i,j,k}$) of variables being recorded during each flight ($V_{i,j}$, V) in a recording order, each flight ($V_{i,j}$, V) being associated with a time-domain series (S, $S_{i,j}$) corresponding to a flight time instant (tv, $t_{Vi,j}$) and including the plurality of collections ($X_{i,j,k}$) of variables recorded during the flight ($V_{i,j}$, V) ordered according to the recording order, the method (100) being **characterised in that** it includes the following steps of:

   - For each maintenance operation (Mi), creating a dataset (Ji) including the time-domain series ($S_{i,j}$) associated with each flight ($V_{i,j}$) that has been carried out between the maintenance time instant ($t_{Mi}$) associated with the maintenance operation (Mi) and the maintenance time instant ($t_{Mi-1}$) associated with the previous maintenance operation ($M_{i-1}$, 101);

- Creating a collection of datasets comprising each dataset ($J_i$) created and separating the collection of datasets ($J_i$) into a training collection and a validation collection (102);
- Jointly training an embedding function (201) and a classifier (202) by minimising a cost function (H, 103), including the following sub-steps of:

  ◦ For each dataset ($J_i$) of the training collection:

    • Randomly drawing a pair of time-domain series including a first time-domain series ($S_{i,j1}$) and a second time-domain series ($S_{i,j2}$, 1031);
    • Applying the embedding function (201) to the pair of time-domain series to obtain a pair of embedments ($P_{i,j1}$, $P_{i,j2}$, 1032);
    • Using the classifier (202) on the pair of embedments ($P_{i,j1}$, $P_{i,j2}$) to obtain a probability ($p_{i,j1,i,j2}$) that the first time-domain series ($S_{i,j1}$) corresponds to a flight time instant ($t_{Vi,j1}$) earlier than the flight time instant ($t_{Vi,j2}$) corresponding to the second time-domain series ($S_{i,j2}$, 1033);
    • Calculating the cost function (H) from the probability ($p_{i,j1,i,j2}$) obtained, the flight time instant ($t_{Vi,j1}$) corresponding to the first time-domain series ($S_{i,j1}$) and the flight time instant ($t_{Vi,j2}$) corresponding to the second time-domain series ($S_{i,j2}$, 1034);
    • Optimising the embedding function (201) and the classifier (202) by minimising the cost function (H) calculated (1035);

- Selecting a reference time-domain series ($S_{ref}$) from the time-domain series ($S_{i,j}$) included in the validation collection, including a sub-step of applying the trained embedding function (201) to the reference time-domain series ($S_{ref}$) to obtain a reference embedment ($P_{ref}$, 104);
- Calculating an indicator of engine state for the given flight (V) (105), including the following sub-steps of:

  ◦ Applying the trained embedding function (201) to the time-domain series (S) associated with the flight (V), to obtain an embedment (P, 1051);
  ◦ Calculating a distance (d) between the embedment (P) and the reference embedment ($P_{ref}$, 1052), the distance (d) calculated corresponding to the indicator of engine state.

2. The evaluation method (100) according to claim 1, **characterised in that** the step (104) of selecting the reference time-domain series ($S_{ref}$) includes the following sub-steps of:

  - Applying the trained embedding function (201) to each time-domain series ($S_{i,j}$) of the validation collection, to obtain an embedment ($P_{i,j}$) for each time-domain series ($S_{i,j}$) of the validation collection (1041);
  - For each time-domain series ($S_{i,j}$) of the validation collection :

    ◦ Calculating the distance (d) between the embedment ($P_{i,j}$) of the time-domain series ($S_{i,j}$) and the embedment ($P_{i,j}$) of each other time-domain series ($S_{i,j}$) of the validation collection (1042);
    ◦ For each dataset ($J_i$) of the validation collection, creating an ageing curve ($C_{i,Si,j}$) associating with each flight time instant ($t_{Vi,j}$) associated with a time-domain series ($S_{i,j}$) of the validation collection included in the dataset ($J_i$), the corresponding distance (d) calculated (1043);
    ◦ For each ageing curve ($C_{i,Si,j}$), calculating a monotonicity indicator (1044);
    ◦ Calculating an ageing indicator from the monotonicity indicators calculated (1045);

  the reference time-domain series ($S_{ref}$) being the time-domain series ($S_{i,j}$) for which the ageing indicator calculated meets an ageing condition.

3. The evaluation method (100) according to claim 2, **characterised in that** the sub-step (1044) of calculating the monotonicity indicator includes the following sub-steps of:

  - Initialising the monotonicity indicator to zero;
  - For each time interval between two successive flight time instants ($t_{Vi,j}$), calculating the first-order time derivative of the ageing curve ($C_{i,Si,j}$):

    ◦ If the derivative is positive, incrementing the monotonicity indicator by 1.

4. The evaluation method (100) according to claim 3, **characterised in that** the ageing indicator is the sum of the monotonicity indicators calculated.

5. The evaluation method (100) according to claim 4, **characterised in that** the ageing condition is verified for the maximum ageing indicator calculated.

6. The evaluation method (100) according to any of the preceding claims, **characterised in that** the cost function (H) is a binary entropy function.

7. The evaluation method (100) according to any of the preceding claims, **characterised in that** it further includes a step (106) of triggering an alarm if the indicator of engine state is greater than an alarm threshold (AT).

8. The evaluation method (100) according to claims 2 and 7, **characterised in that** the alarm threshold (AT) is equal to the maximum ageing indicator preceding a maintenance operation (Mi) by a predefined time margin.

9. A method for tracking the relative state of an aircraft engine over a plurality of flights (V) including the steps of the evaluation method (100) according to any of the preceding claims for one flight (V) of the plurality of flights (V), and the triggering step (106) for every other flight (V) of the plurality of flights (V).

10. A computer program product comprising instructions which, when the program is executed on a computer, cause the computer to implement the steps of the evaluation method (100) according to any one of claims 1 to 8 or the steps of the tracking method according to claim 9.

Fig.1

Fig.2

**Fig. 3**

**Fig. 4**

**Fig. 5**

**Fig. 6**

$C_{i,Si,j1}$

d $(P_{i,j1}, P_{i,j3})$

d $(P_{i,j1}, P_{i,j2})$

d $(P_{i,j1}, P_{i,j1})$

$t_{Vi,j1}$          $t_{Vi,j2}$          $t_{Vi,j3}$

**Fig. 7**

SA

**Fig. 8**

**RÉFÉRENCES CITÉES DANS LA DESCRIPTION**

**Documents brevets cités dans la description**

- FR 3006785 A1
- FR 2939170 A1
- WO 2020115440 A1